# EUROPEAN PATENT APPLICATION

(11) **EP 3 845 826 A1**
(43) Date of publication of application: **07.07.2021**
(21) Application number: 20154992.0
(22) Date of filing: 31.01.2020
(51) Int. Cl.: F24S 20/70, F24S 30/452, F24S 40/00, H02S 20/00, F24S 40/80, A01D 44/00

(54) **FLOATABLE SOLAR PANEL ASSEMBLY**

(30) Priority: 03.01.2020 EP 20150276
(71) Applicant: Bakker, Johan Jelle Solco, 6522 GC Nijmegen (NL)
(72) Inventor: Bakker, Johan Jelle Solco, 6522 GC Nijmegen (NL)
(74) Representative: Algemeen Octrooi- en Merkenbureau B.V.

(57) **Abstract**

The invention provides a floatable solar panel assembly (1) comprising a series of solar panels (2) on a floatable frame (3) that defines a float plane (P) with an upper side which in operation with said floatable frame (3) floating on a water surface (W) is above said water surface (W), said solar panels (2) having a lower side (7), a solar panel plane, and a tilt axis, said floatable solar panel assembly (1) further comprising a float plane adjusting system (27) for submerging said solar panels (2) below said water surface (W).

## Description

### Field of the invention

The invention relates to a floatable solar panel assembly, and a method for affecting positioning and orientation of solar panels of a floating solar panel system.

### Background of the invention

In view of reducing our use of fossil-based energy sources and introduction of renewable energy sources, currently much effort is put in harvesting solar energy. Solar panels are being mounted on roofs of buildings. In this way, the areal space of roofs is re-used for a new purpose. Furthermore, areas of land are being tiled with solar panels or photovoltaic panels. For waters surfaces, placing solar panels has proven to be a challenge. Water surfaces provide an environment with many changes and in shorter timespan than on-land surfaces.

### Summary of the invention

A disadvantage of prior art and known assemblies is that changes are not properly addressed a simple assembly that requires minimal costs, including installation casts, is simple to operate. Furthermore, the current assembly can increase efficiency at low cost. Furthermore or in addition, the current assembly seeks to provide reliability and efficiency in different water circumstances and weather circumstances of current floating solar systems and assemblies. The current assembly in embodiments provides a solution to water level fluctuation, ice, storm and growing of underwater plants.

Hence, it is an aspect of the invention to provide an alternative floatable solar panel assembly, which preferably further at least partly obviates one or more of above-described drawbacks.

There is provide a floatable solar panel assembly comprising a series of solar panels on a floatable frame that defines a float plane with an upper side which in operation with said floatable frame floating on a water surface is above said water surface, said solar panels having a lower side, a solar panel plane, and a tilt axis.

The floatable solar panel assembly further comprising a float plane adjusting system for submerging said solar panels below said water surface.

There is further provided floatable solar panel assembly comprising a series of solar panels on a floatable frame that defines a float plane with an upper side which in operation with said floatable frame floating on a water surface is above said water surface, said solar panels having a lower side, a solar panel plane, and a tilt axis.

Said floating solar panel system further comprising a panel tilting actuator, wherein said panel tilting actuator adapted for actuating tilting of said solar panels in an operational position range wherein said solar panels are at an upper side of said float plane and actuating said solar panels into a safe position range wherein said solar panels are in a position below said float plane.

There is further provided a floatable solar panel assembly comprising a series of solar panels on a floatable frame that defines a float plane with an upper side which in operation with said floatable frame floating on a water surface is above said water surface, said solar panels having a lower side, a solar panel plane, and a tilt axis.

The floatable solar panel assembly further comprising a sun tracking actuator for changing an azimuth angle of said floatable frame, allowing following a sun path during a day.

There is further provided a floatable solar panel assembly comprising a series of solar panels on a floatable frame that defines a float plane with an upper side which in operation with said floatable frame floating on a water surface is above said water surface, said solar panels having a lower side, a solar panel plane, and a tilt axis.

Said floatable solar panel assembly further comprising a mowing system comprising at least one cutter having a mowing position at a distance from said float plane, in operation below said water surface.

The features of the floatable solar panel assembly can be combined.

There is further provided a method for operating a floatable solar panel assembly comprising a series of solar panels on a floatable frame that defines a float plane with an upper side which in operation with said floatable frame floating on a water surface is above said water surface, said solar panels having a lower side, a solar panel plane, and a tilt axis. In an embodiment this method comprises modification of a density of the floatable frame for bringing the solar panels below said water surface.

In a further or alternative method, said floatable frame is rotated on said water surface. In this way, sun tracking is possible.

In an embodiment, the solar panel is a photovoltaic panel. In particular, a photovoltaic panel is a panel that converts incoming (sun)light into electrical power. Often and currently, solar panels are based upon crystalline silicon, but other panels can be considered, like thin film solar panels, and solar panels based upon different materials. These are known to a skilled person.

For a solar panel system on a water surface, there are many additional variables that need to be taken into account, separately or in combination. Some of these are: water level fluctuation
Water depth fluctuation
Stormy weather
Growing underwater plants
Freezing of water surface
Canals versus water surfaces like lakes
Absolute depth of the water

The current assembly provides 'Tilt and track floating solar panels' and offers 'building blocks' for floating solar panels in different water circumstances.

The current assembly applies two main principles that may be used separately or in combination:
- using gravity, counterweights for tilting panels
- Using winches for sun tracking and tilting

Some of the innovative elements used in the current assembly that may be used separately of in combination, and which will be explained in the claims and the description of embodiments:
- Automatically tilting down cylindric drivers with solar panels or panels on turn axis and counterweights. To prevent solar panels against storm damage.
- Using a (partial) combination of winching, upright frame, worm gear rack and pinion, torque limiter and ratcheting mechanism to rise the panels out of the water. After the storm.
- Tilting solar panels flat in a flat box frame work, in case of period of freezing. So storm can't blow panels away
- Pull down winching of floating solar fields in vertical direction ('sinking') in case of very heavy weather
- Sun tracking by forward backward pull-down winching in a circle winch, using floating pontoons with faired rollers to clamp and anchor the solar floating fields and move for sun tracking.
- Using the same pontoons with barrel stone weights for water bank anchoring while water level fluctuation. Using 'bridge boats' for lifting the anchoring cables between pontoon and water bank, so mowing boats can pass.
- Mowing by counterweight poles with a horizontal cutting wire or grid under the panel drivers. I.e. movement by vertical tilting and or horizontal sun tracking
- Mowing by forward backward electric mower under floating solar field, and rotation for sun tracking at the same time.
- Making on the counterweight poles and or under the floating drivers, 'brushes' for anchoring by freezing
- Enable double-line winching on canals for sun tracking, wire mowing and making room in the canal. Using fixed cable floaters in an elongated slot on the floating 'tilt up' drivers.
- For floating solar fields on a lake enable double line winching by elongated slots for flexible movement along stud poles or cable floaters.

In an embodiment, at said operational position range said solar panels are with their solar panel plane between a perpendicular position at 90 degrees with respect to the float plane and an in-plane position with said solar panel plane in-plane with respect to said float plane.

In an embodiment, for binging said solar panels in said safe position range, said tilt actuator is adapted for tilting said solar panels beyond said in-plane position into said safe position range, in operation below said float plane.

In an embodiment, the floatable solar panel assembly comprises at least one floatable body positionally fixed to said floatable frame, said floatable body having at last one solar panel mounted to it.

In an embodiment, the at least one floatable body is rotatably mounted to said floatable frame, and coupled to said tilting actuator.

In an embodiment, the at least one floatable body comprises a center of mass and a center of mass actuator adapted for displacing said center of mass of said at least one floatable body for in operation causing said at least one floatable body to rotate, causing tilting of said solar panel, in particular said center of mass actuator is operationally coupled to said tilt actuator, more in particular said mass actuator is adapted for displacing a mass in said at least one floatable body.

In an embodiment, the floatable solar panel assembly comprises a series of said parallel floatable bodies holding at least one solar panel, holding solar panels with solar panel plane functionally parallel in one or more lines, one or more rows, or a combination thereof.

In an embodiment, the floatable solar panel assembly further comprises a solar tracker actuator, wherein said solar tracker actuator actuates rotation of a series of said solar panels of said floatable solar panel system as an ensemble together for following or tracking an azimuth part of the suns orbit in the sky.

In an embodiment, the floatable solar panel assembly further comprises a cutter below said float plane and in operation below said water surface, for cutting water plants growing below said floatable frame.

In an embodiment, the floatable solar panel assembly further comprises a anchoring system for anchoring said floatable frame to a fixed world whilst floating, said anchoring system comprising a height adjustment actuator for adjusting a distance of said float plane and said fixed world, in operation enabling pulling said floatable frame and said solar panels below said water surface.

There is further provided a floatable solar panel assembly comprising a series of solar panels on a floatable frame that defines a float plane with an upper side which in operation with said floatable frame floating on a water surface is above said water surface, said solar panels having a lower side, a solar panel plane, and a tilt axis, said floatable solar panel assembly further comprising a float plane adjusting system for submerging said solar panels below said water surface.

This can be combined with other features described in the current application, both in clauses as well as in claims.

Various advantages of these embodiments are further illustrated in the detailed description and description of embodiments.

The term "substantially" herein, such as in "substantially perpendicular" or in "substantially consists", will be understood by the person skilled in the art. The term "substantially" may also include embodiments with "entirely", "completely", "all", etc. Hence, in embodiments the adjective substantially may also be removed. Where applicable, the term "substantially" may also relate to 90% or higher, such as 95% or higher, especially 99% or higher, even more especially 99.5% or higher, including 100%. The term "comprise" includes also embodiments wherein the term "comprises" means "consists of'.

The term "functionally" will be understood by, and be clear to, a person skilled in the art. The term "substantially" as well as "functionally" may also include embodiments with "entirely", "completely", "all", etc. Hence, in embodiments the adjective functionally may also be removed. When used, for instance in "functionally parallel", a skilled person will understand that the adjective "functionally" includes the term substantially as explained above. Functionally in particular is to be understood to include a configuration of features that allows these features to function as if the adjective "functionally" was not present. The term "functionally" is intended to cover variations in the feature to which it refers, and which variations are such that in the functional use of the feature, possibly in combination with other features it relates to in the invention, that combination of features is able to operate or function. For instance, if an antenna is functionally coupled or functionally connected to a communication device, received electromagnetic signals that are receives by the antenna can be used by the communication device. The word "functionally" as for instance used in "functionally parallel" is used to cover exactly parallel, but also the embodiments that are covered by the word "substantially" explained above. For instance, "functionally parallel" relates to embodiments that in operation function as if the parts are for instance parallel. This covers embodiments for which it is clear to a skilled person that it operates within its intended field of use as if it were parallel.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The assembly, devices or apparatus herein are amongst others described during operation. As will be clear to the person skilled in the art, the invention is not limited to methods of operation or devices in operation.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. The article "a" or "an" preceding an element does not exclude the presence of a plurality of such elements. The invention may be implemented by means of hardware comprising several distinct elements. In the device or apparatus claims enumerating several means, several of these means may be embodied by one and the same item of hardware. The mere fact that certain measures are recited in mutually different dependent claims does not indicate that a combination of these measures cannot be used to advantage.

The invention further applies to an apparatus or device comprising one or more of the characterising features described in the description and/or shown in the attached drawings. The invention further pertains to a method or process comprising one or more of the characterising features described in the description and/or shown in the attached drawings.

The various aspects discussed in this patent can be combined in order to provide additional advantages. Furthermore, some of the features can form the basis for one or more divisional applications.

### Brief description of the drawings

Embodiments of the invention will now be described, by way of example only, with reference to the accompanying schematic drawings in which corresponding reference symbols indicate corresponding parts, and in which:
Figures 1-5 schematically depict embodiments of the basic design;
figures 6-9 show embodiments providing the functionality of sun tracking to the assembly;
figures 10-12 show embodiments of various different cutting devices attached on the frame or the assembly 1 below the float plan;
figure 13 illustrates a relatively simple embodiment of a floatable solar panel assembly 1;
figure 14 shows two assemblies of figure 13;
figure 15 depicts the floatable element 5 of figure 13, showing two sides;
figures 16-18 show an embodiment of a tilt frame and an alternative tilt actuator;
figure 19 shows a mechanical tilt actuator that uses frame motion for getting a solar panel from its safe position below a water surface back to its operational position using ratchets;
figure 20 shows the embodiment of figure 6 (and figure 8) with an anchoring line 10;
figure 21 showing the anchoring lines 10 running via floatable bodies,
figures 22-26 further embodiments of a floatable solar panel assembly.

The drawings are schematic and not necessarily on scale.

### Description of preferred embodiments

As explained, the current application relates to an assembly that provides solar panels on a water surface. The current assembly is floatable on such a water surface.

A frame is provided for positioning the solar panels. The frame is floatable. In particular, it is provided with buoyant or floatable elements or it is constructed in such a way that it is floatable. As a result, the frame is floatable and provides a floatable assembly.

In the drawings, for clarity reasons not all of the features are always indicated with a reference number. For instance, an assembly can hold many solar panels. In most assemblies, only several solar panels 2 are indicated.

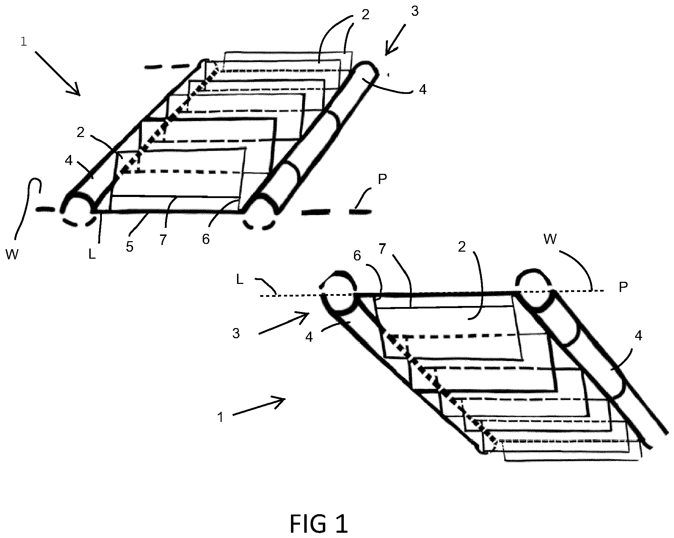

Examples of the basic designs are first depicted in figures 1-5.

Figure 1 schematically depicts two assemblies 1 which here comprises a frame 3 comprising two elongated floatable cylinders 4 as buoyant elements and that are mutually coupled by coupling elements which keep the floatable cylinders 4 positioned together. The coupling elements are rotatable about their longitudinal axes. A solar panel frame 6 is coupled to the coupling elements. The solar panel frame 6 holds a solar panel 2. The solar panels 2 are usually rectangular and define a solar panel plane. The solar panels are maintained with one side, usually their lower side (in use) functionally parallel to the longitudinal axes of the coupling elements. The elongated floatable cylinders 4 define a float plane P. When rotating the coupling elements about their longitudinal axes, the solar panels 2 will tilt. This allows solar panels 2 to be positioned at an optimal tilt position with respect to the sun, and allows tilting into the safe position.

In figure 1, the left assembly 1 is depicted afloat with the solar panels 2 in a tilted angle above a water surface. This is referred to as the operational position that allows the solar panels 2 to catch the light of the sun. The right assembly 1 is afloat with its solar panels 2 into a safe position below the surface of the water and below the float plane P.

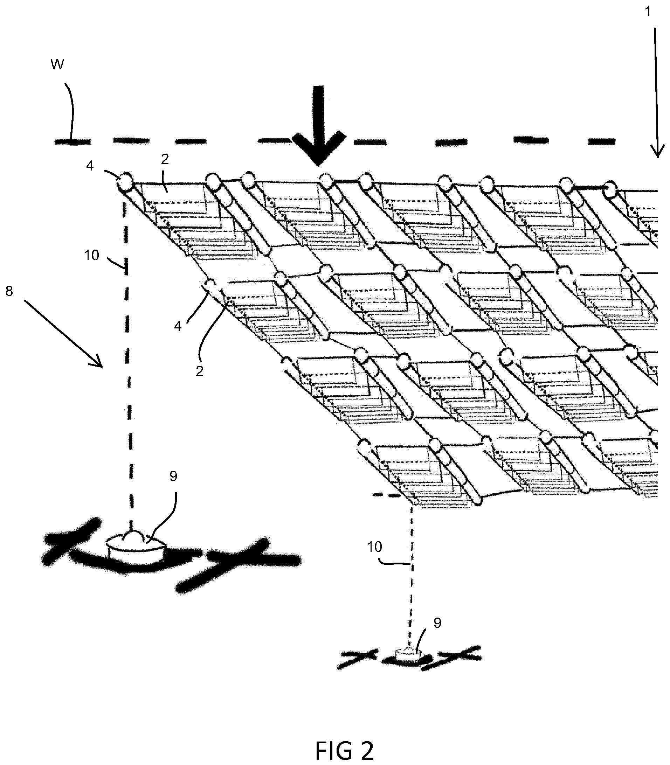

In figure 2, assemblies 1 as described above and shown in figure 1 are mutually coupled into a larger structure. The assemblies 1 are depicted with the solar panels 2 in the safe position below a water surface W. Furthermore, the assembly 1 comprises an anchoring system 8 (here only two depicted) comprising anchoring elements that anchor the assembly in position. Furthermore, such anchoring system may set an assembly level of the assembly 1 as illustrated in figure 2. In this embodiment, coupling elements, for instance cables or lines 10, here together pull the assembly 1 under the water surface W for providing even more safety to the solar panels 2 which are already in a safe position.

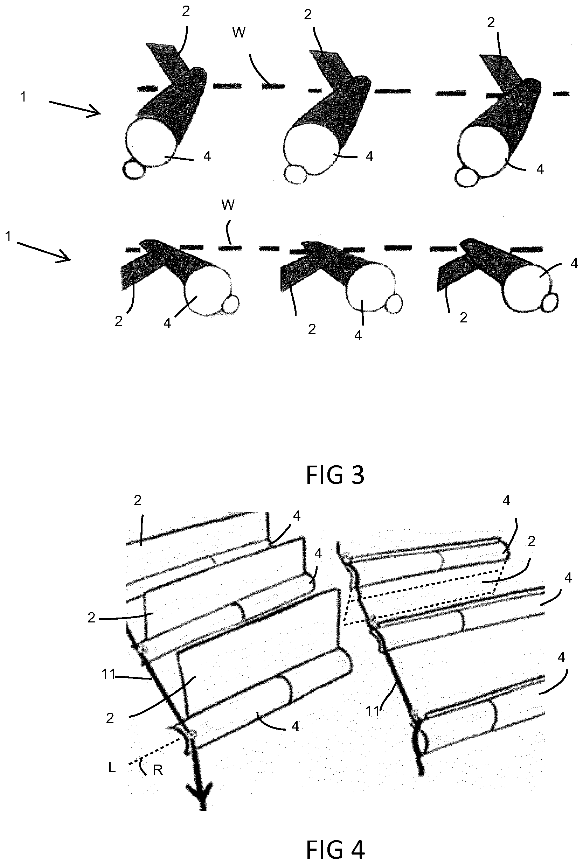

In figure 3 an alternative embodiment is schematically depicted, showing two assemblies 1 one above the other showing the solar panels 2 in different positions. In the depicted embodiment, the frame 3 comprises coupled buoyant bodies 4 that each have one or more solar panels 2 attached to them. The buoyant bodies 4 are mutually functionally parallel and in such a way coupled into and forming the frame 3. The buoyant or floatable bodies 4 are coupled rotatably about a longitudinal axis to one another into and forming the frame 3. Here, the buoyant bodies 4 are cylinders, but other elongated bodies many be used. Solar panels 2 are attached to the buoyant bodies 4. Here, one side of the solar panels 2 is attached to or near the buoyant bodies 4. One side of the solar panels 2 is parallel to the longitudinal direction or rotational axes R of the buoyant bodies 4. The solar panels 2 are mounted to the buoyant bodies 4 in such a way that upon rotation of the buoyant bodies 4, the solar panels 2 tilt. In the topmost assembly 1 of figure 3, the solar panels 2 are in an operational position, allowing the solar panels 2 to catch sunlight. In the lower assembly 1 of figure 3, the buoyant bodies 4 are rotated into a position such that the mounted solar panels 2 are tilted into their safe positions below float plane P, in operation below the water surface W.

Rotation of the buoyant bodies 4, and thus tilting of the solar panels 2, can be done in different ways. In figures 3 and 4, two different embodiments are depicted. In figure 4, in the assembly 1 on the left, the solar panels 2 are in their operational position, and in the assembly 1 on the right the solar panels 2 are in their safe position.

In figure 3, the buoyant bodies 4 are rotated through displacement of a center of gravity of the buoyant bodies 4. This can cause the buoyant bodies 4 to rotate about their longitudinal axes.

In the embodiment of figure 4, a force is exerted on the buoyant bodies 4 that causes them to rotate. In the embodiment of figure 4, the buoyant bodies 4 are at a spot on their circumference attached to a cable or line, a tilt actuator line 15. Applying a pulling force on that rope or cable 15 will cause rotation of the buoyant bodies 4 and thus a tilting of the solar panels 2.

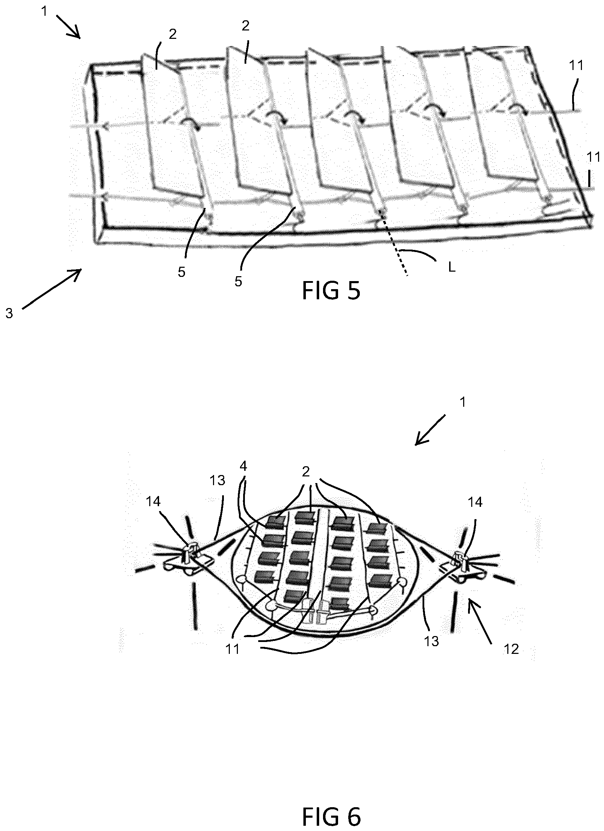

In figure 5, an embodiment of an assembly 1 is shown comprising a frame 3 holding rotatable coupling elements 5 holding solar panels 2. Here, rotation of the rotatable coupling elements 5 and thus tilting of the solar panels is actuated by means of a tilt actuator line 11. Pulling or releasing the tilt actuator line 11 will set a tilt angle of the solar panels.

When ice and freezing, panels can go flat and will be protected against wind and storm because of the surrounding rectangular floating frame ('box') and poles as anchors. Counter weights (poles) are also anchors for pulling.

In figures 6-9, various embodiments are schematically shown for providing the functionality of sun tracking to the assembly 1. Most of the proposed embodiments can be applied to the assemblies 1 described so far. To that end, the assemblies 1 comprise a sun tracking actuator 12. As described earlier, the sun tracking actuator 12 actuates rotation of the solar panels 2 to follow or track an azimuth part of the suns orbit in a day. In other words, The sun tracking actuator 12 will position the solar panels 2 such that their normal points east in the morning, south at midday, and west at the end of the day.

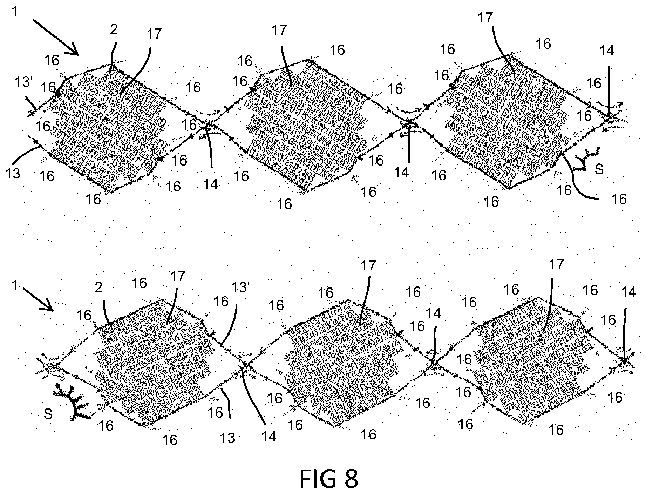

In figure 6, the sun tracking actuator 12 comprises a set of lines 13 and driving devices or tracking actuators 14 that can pull a tracking line 13. A series of solar panels 2 on a floatable frame 3 in this embodiment is attached to two lines 13. When a tracking actuator 14 pulls one line 13 and releases the other line 13, both lines 13 can be pulled in opposite direction and the assembly 1 will rotate. More tracking lines 13 and driving devices 14 are possible and increase reliability, but increases complexity and costs. In this embodiment, a simple line, clamp and actuator can provide sun tracking for a large field of solar panels. In an embodiment, the tracking actuators 14 each comprises a floatable body, for instance a ponton. The floatable body can be provided with an anchoring system 8. In this way, the height of the floatable body with respect to the floor can be set. In case of emergency, like for instance a very heavy storm of typhoon or the like, the floatable body can be lowered below a water surface. When coupled to the further assembly, this can also pull that further assembly below the water surface. Furthermore, lowering the floatable body without lowering the further assembly can provide a fairway between groups or sub-assemblies (see figure 8).

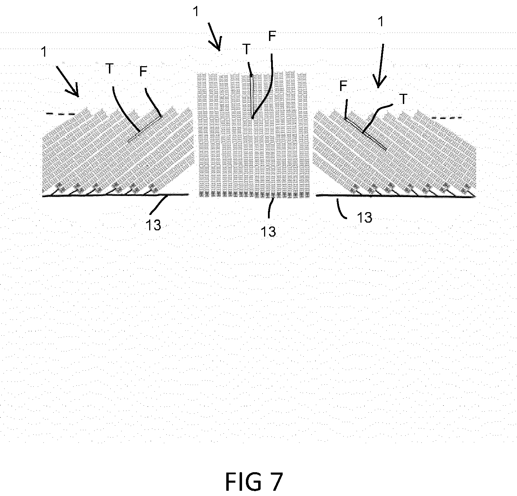

In the embodiment shown in figure 7, three tracking orientations of the assembly 1 are depicted. In this embodiment, the assembly 1 comprises various parallel lines of solar panels 2. Each line can for instance comprise a setup as illustrated in figure 1 or 4 or 5. Each line of solar panels lines can shift in longitudinal direction (direction of track T) with respect to its neighboring lines of solar panels. One single tracking actuator may cause rotation of the assembly and thus tracking. The assembly to that end has one fixing point F that is fixed to the world and which can travel along a track T (in fact, the assembly rotates and trach T moves over the fixing point) that is fixed in the assembly 1. In an example, fixing point F comprises a stud pole attached to a lake floor or sea floor. In the embodiment, the stud pole extends in track T. Again, using a simple line 13 and actuator for applying force, like a winch, can provide sun tracking for a large assembly.

In the embodiment of figure 8, two sun tracking states are indicates one above the other. A position of the sun S is indicated. the assemblies 1 are split into (here) three assembly groups 17. Two actuator lines 13, 13' together surround the assembly groups 17, each line 13, 13' here surrounding about half of the circumference. The groups 17 comprise various tracking line clamps 16 that can be actuated into a line clamp and line release state. When for instance the tracking actuators 14 pull line 13 and releases line 13' or pull it in opposite direction, the assembly groups 17 rotate. Each time, tracking line clamps 16 can release or clamp lines 13, 13'. The subsequent clamping or releasing will allow the groups 17 to rotate further, allowing complete sun tracking.

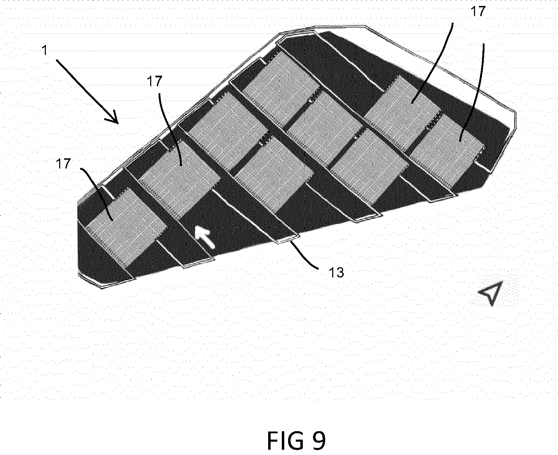

In figure 9, an assembly 1 comprising various groups of assemblies 17, each member of the group of assemblies 17 (not all with reference numbers) for instance according to the assembly 1 of figure 7, is depicted. The tracking actuator line 13 zigzags or serpentines along group members 17 and is guided around turns in a way to allow the tracking actuator line 13 to exert a force on each assembly group member 17. Thus, one actuator and one line can provide sun tracking for a complete assembly 1 of very many solar panels 2. Thus, with minimal costs efficiency largely increases.

A problem which may occur when operating floating solar panel assembly 1 is that water plants can grow beneath the assembly 1. In an embodiment, the assembly 1 is provided with a cutter 18 below said float plane and in operation below said water surface W, for cutting water plants growing below said floatable frame 3. For Sun tracking, a shape of the floating fields/assembly member groups 17 that is more round and underwater winching enables 'one line'-rotation of the fields each as a whole.

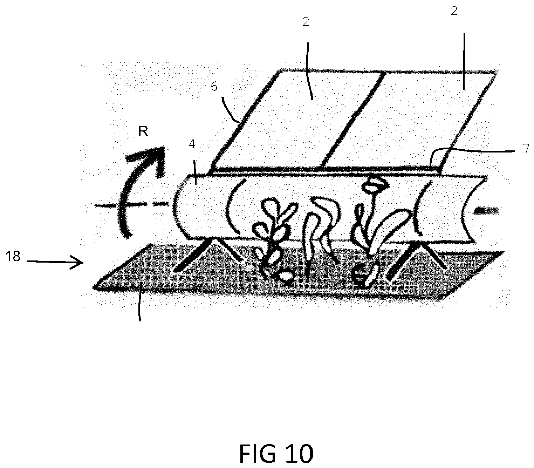

In embodiment shown in figures 10-12, various different cutting devices 18 are attached on the frame 3 or the assembly 1 below the float plan P.

In the embodiment of figure 10, a cutter 18 comprises a frame, for instance a wire frame, mounted on the floatable element 4. When the floatable element 4 is rotated, which will cause tilting of solar panel 2, the wire frame will move and cut growing plants. Such a provision is simple to install.

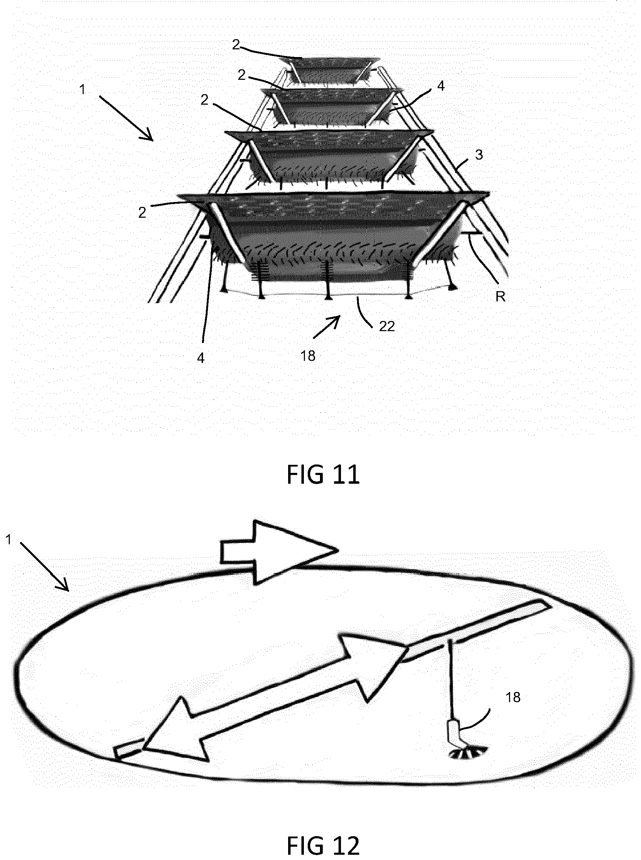

In the embodiments depicted in figure 11, the cutter 18 comprises a cutting wire 22 attached at a distance from the floatable element 4 that holds the one or more solar panels 2. Upon rotating the floatable element 4, the cutting wire 22 will go back and forth, thus cutting plants below the float plane P. The tracking motion of the assembly 1 will increase the reach of the cutter 18. The cutter 18 is here provided below floatable elements 5. It goes without saying that the cutter can also be provided on the embodiments of the assembly with other coupling elements 5 holding solar panels 2, like the assembly shown in figure 1.

In another embodiment, depicted in figure 12, an active cutter 18 with moving, for instance rotating, blades may be mounted below the float plane P on the frame 3. In these embodiments, tracking movement of the assembly will extend the working range of the cutter 18. In the embodiment of figure 12, the cutting device 18 can travel along a path indicated. Together with the sun tracking rotation of the assembly, this allows the cutter 18 to cover the complete area of the assembly 1.

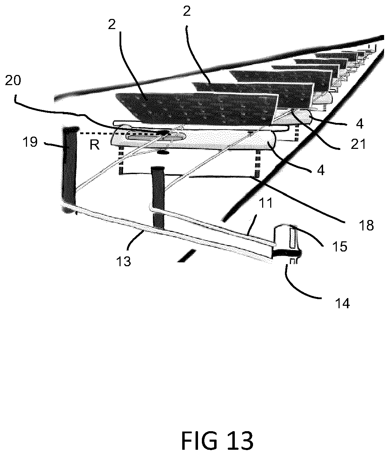

In figure 13, a relatively simple embodiment of a floatable solar panel assembly 1 is illustrated in a schematic drawing. The floatable elements 5 are floatable circle cylinders holding one or more solar panels 2, here rectangular, with one side parallel to the rotational axes R or longitudinal axes L of the floatable coupling elements 5. The frame 3 further comprises lines or cable that maintain the floatable coupling elements 5 functionally parallel. The assembly comprises a tilt actuator line 11 and a tracking actuator line 13. When the tilt actuator line 11 is pulled in one direction or the opposite direction, the floatable coupling elements 5 will rotate about their rotational axes R and the solar panels will tilt. To that end, the actuator line is attached at tilt actuator line attachment 21.

The floatable coupling elements 5 further comprise a tracking actuator line attachment 20 that is attached to the tracking actuator line 13 and that is moveable parallel to the rotational axes of the floatable coupling elements 5. When the tilt actuating line 11 is stopped and tensioned, and the tracking actuator line is pulled in one direction or the opposite (i.e., a pulling force is applied to the line), and at the same time the tracking line bend 19 is displaced with a towards the tilt actuator line 11 or away from it, the floatable coupling elements 5 will all simultaneously rotate about their tilt actuator line attachment 21. The solar panels 2 will thus remain functionally parallel. In an embodiment, the tracking actuator line attachment 20 is able to displace parallel to the longitudinal axis L of its floatable element 5. This displacement can be passive, i.e., because of the displacement of the tracking line bend 19. Alternative, each floatable element 4 can be provided with an actuator for displacing the tracking actuator line attachment 20.

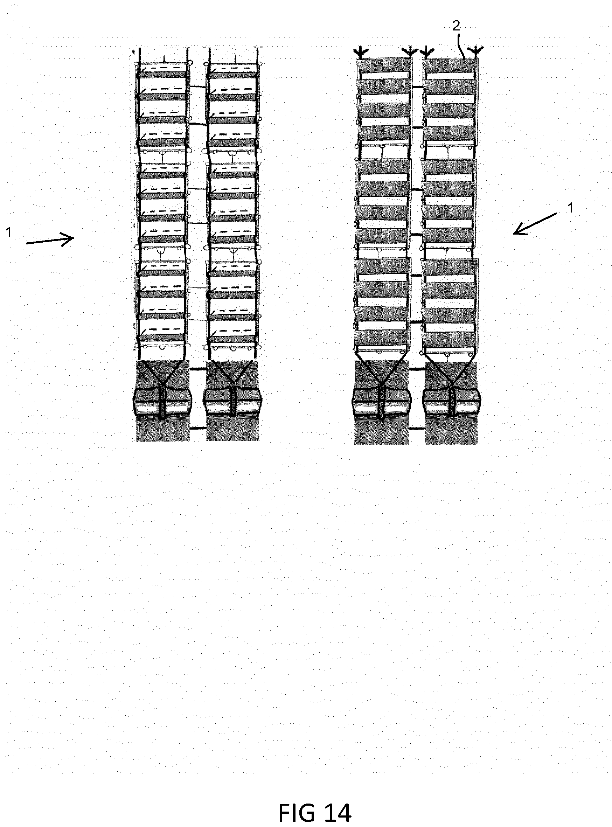

Figure 14 shows two assemblies of figure 13, one with solar panels 2 in the safe position (left) and another assembly 1 with the solar panels 2 in the operational position (right).

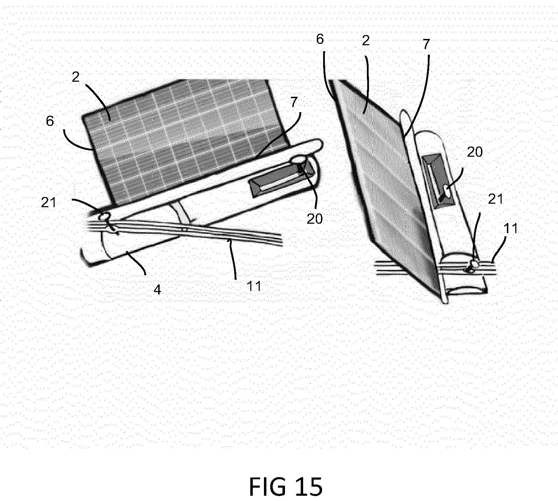

In figure 15, the floatable element 5 of figure 13 is depicted showing two sides. The tracking actuator line attachment 20 can be one that can move freely while the tracking line bend 19 is moved. In an alternative embodiment, the tracking actuator line attachment 20 can comprise an actuator that displaces the tracking actuator line attachment 20, causing the floatable coupling element 5 to rotate about the tilt actuator line attachment 21. Both actional may also be combined, for instance the tilt actuator line 11 and the tracking actuator line may be brought close together, or they may be pulled in opposite direction while allowing their mutual distance to change, thus rotating the floatable coupling element 5 about a rotation axis that is between both attachments 19, 20.

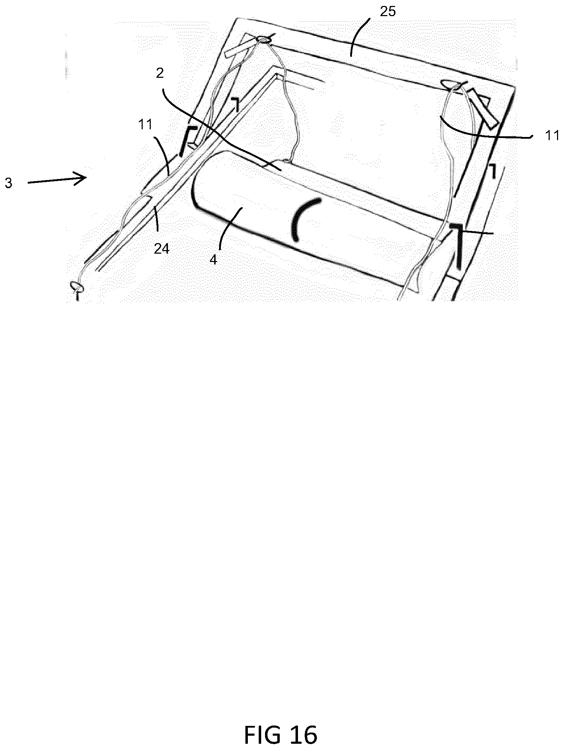

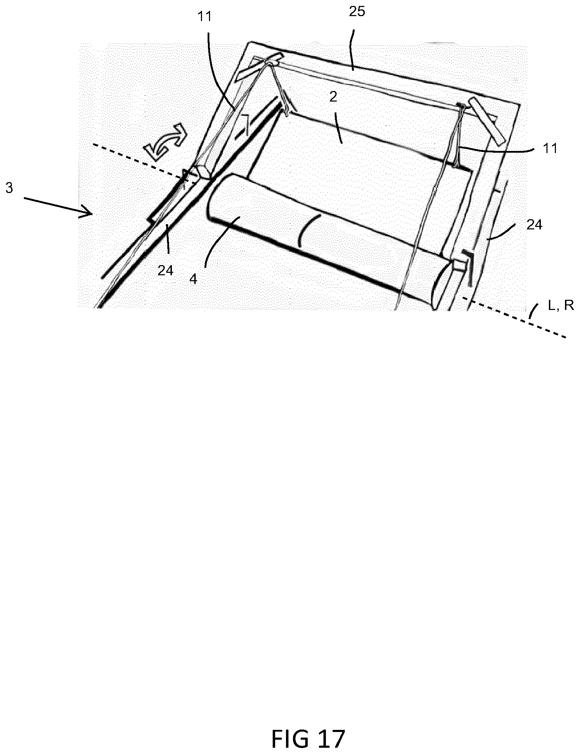

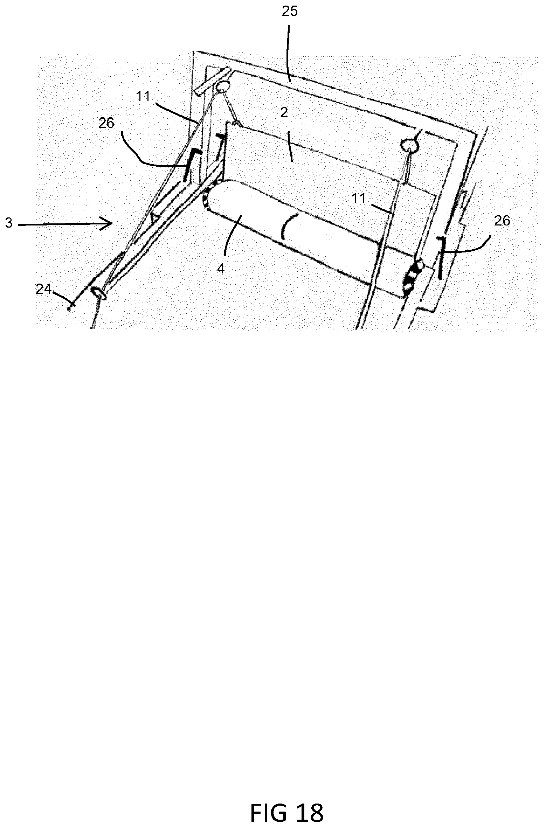

Figures 16-18 show an embodiment of an alternative tilt actuator. In this embodiment, a floatable element 5 holding one or more solar panels 2 is rotatable R with respect to a further subframe 24 about longitudinal axis L. The assembly 1 is biased (for instance the floatable elements 4 or coupling elements 5 holding the solar panels 2 are spring-biased) such that the solar panels are in their safe position. This, when no force is applied, the solar panels 2 are in their safe position, below the water surface W. This is indicated in figure 16. In figure 17, a pulling force is applied to the tilt actuator line 11. This will pull the solar panel 2 out of the water. The tilt angle stops 26 block the tilt angle frame 25 at a set tilt angle, thus also positioning the solar panel 2 at that tilt angle, see figure 18. In figure 18, a worm gear rack and pinion can be added to the horizontal rotating axis. This can operate as tilting actuator.

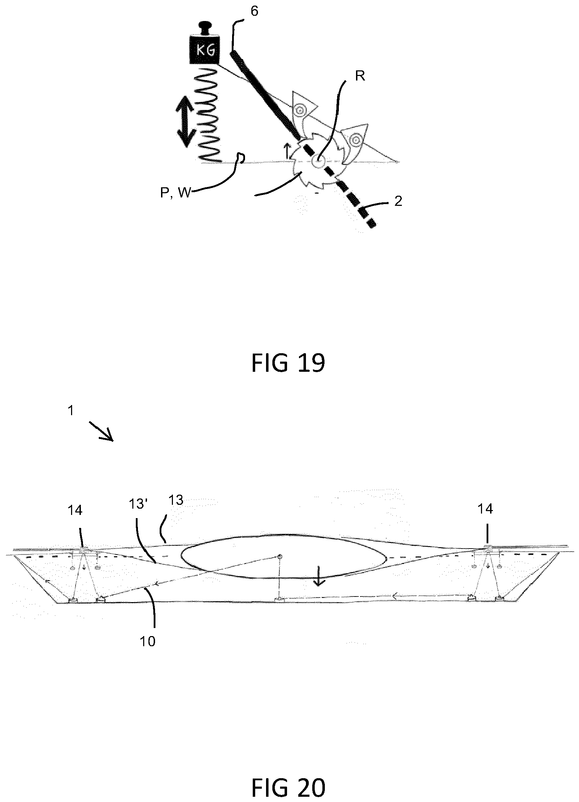

Figure 19 shows schematically a mechanical tilt actuator principle that uses frame motion for getting a solar panel from its safe position below a water surface back to its operational position using a ratchet system 23, thus is in the drawing schematically indicated by a gear and pawn. A floating assembly 1 can be divided into groups 17 that are coupled to one another and each float and go up and down on the waves of the water surface. Alternatively, tide and tidal level differences may be used. A ratchet system 23 may be coupled to the tilt actuator line 11. In that way, kinetic energy from the floating assembly on a water surface can be used in order to pull the solar panels 2 out of the water from their safe position into their operational position. In the schematic embodiment, a gear is couples to the rotational axis of for instance a floatable element 5, and pawns are coupled to a part that is kinetically delayed with respect to movements of the frame 3 (or rotational axis or the floatable body). In this schematic drawing, a spring-laded weight moved out of phase with respect to the floating motion of the frame 3.

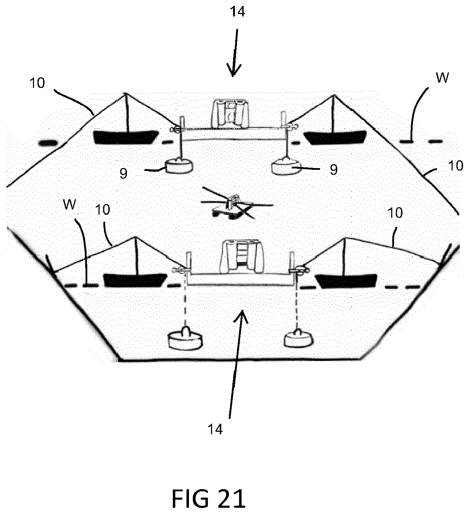

In figure 20, the embodiment of figure 6 (and figure 8) is depicted with an anchoring line 10. When pulling the anchoring line 10, the tracking actuators 14 are pulled down, i.e., lowered with respect to the floor or bed. This causes the further assembly to also lower. In this way, by pulling anchoring lines 10, the assembly 1 can be lowered, for instance in response to water level change, but in can also pull the assembly below the water for protection. In the embodiment of figure 21, the anchoring lines 10 run via floatable bodies. In this way, as explained earlier, a fairway can be cleared.

In an embodiment, the center of gravity of the floatable elements is adjusted so that the panels will sink underwater when in 'free position', bringing the solar panels to the safe position. This is safe. We call it 'tumble down'.

We can add more robustness to the drivers and devices by a vertical standing and tilting frame on each driver. Winches are needed for traction to rise the panels.

We can add more robustness to the drivers by Worm-gear-rack-and-pinions between drivers and the floating horizontal frame.

When there is no risk for storm (sheltered environment, depends on the country, etc), it is possible to move the weight on/in the driver/floatable element (i.e. move the center of gravity) for the solar panels tumble 'upright' instead of tumble underwater and immerse.

By columnar anchors or poles on the drivers instead of weight centred in the driver, we will need less weight for the tilting gravity. The poles are multi-functional and can be used as illustrated in figure 7.

Pulling the cables for tilting-up can take many hours. It is no problem. One actuator, for instance a winch, could pull for example 4000 panels. That is a field of floatable elements. More likely to construct is one winch for each floating line of 10 devices. 'Tilt and track' offers customization.

When the water location is not deep, or the water banks are close enough, it is possible to combine line-pull winching and flexibele sliding along spud poles or fixed buoy-cable anchoring. The stud pole will stand and move in a constructed ditch of the floating field. Instead of a stud pole, an alternative is a floating assembly with line-cable anchored and sliding buoy, in the ditch.

Combining pull-down double 'line' winching in a loupe (one winch) for sun tracking and anchoring on the banks, with tilting winching on the rows.

Another method ('circle') for sun tracking is to clamp the floating field in a pull-down winch loupe by faired rollers on 'boats' (pontoons). Let's say, a kind of 'circle' winching. The benefit is: only one cable line for sun tracking and anchoring.

Sun tracking 120 degrees with two fixed anchorages is best. 160 degrees sun tracking with one fixed anchorage is still possible, when the anchoring will be one in between of two.

A main principle for 'circle' method are the floating pontoons, with faired rollers and barrel stones for gravity, balance and flexibility for water level fluctuation.

For anchoring 'line winching' to the water banks is the same balancing with barrel stones a solution for water level fluctuation. Instead of faired rollers and pontoons, use buoys and pulleys.

Most of the water locations have to be mowed (cutting the water plants) one or two times the year. Around the floating fields it is easy to mow using amphibic mowing boat (for instance named Truxor). Alternatively, mowing using non-amphibic mowing boat is possible by lifting the anchoring cables to the water banks by cable boats like in some of the drawings.

After the storm, there is always a day with enough wind and swell on the water.

With weights and floats drive a ratcheting mechanism to lift the panels out of the water.

After a storm there are enough hours left for swell and waves on the water. With weights on the drivers going up and down and a ratcheting and worm gear mechanism it is possible to wiggle the panels up. For down, as storm starts, a torque limiter may limit the torque by slipping (as in a friction plate slip-clutch), or uncouple the panels entirely (as in a shear pin). And so we have a closed move for tilting panels.

The various inventive elements and features.
- the combination of tilting, gravity, immersing the panels, using poles for gravity, anchoring, pulling and tension of cutting wire, together in one solution.
- The use of existing 'best techniques' for constructing a mechanism of up- and-down wiggle of weights and springs, on the drivers, ratcheting and lifting like a jack (with runners and climbing pins and springs), worm gear rack and pinion, torque limiters for slipping, all automatically.
- The combination of a floating rectangular frame ('box') and flat /horizontal tilted panels, in case of frozen water. Anchoring the box by vertical cable through the ice and so enabling sun tracking of solo boxes.
- Pull-down winching for tilting panels in combination of worm gear rack and pinion linking turning horizontal axis and floating 'box'. I.e. linking pull cable and 'box'.
- The combination of winching, pontoons with faired rollers, barrel stones, (detachable of no-detachable grips or clamps for enclosing the floating field, only two anchor points each field, and anchoring the banks, for water level fluctuation and sun tracking.
- The use of 'bridge boats' for anchoring cables between pontoons and banks, for passage boats for maintenance.
- Automatic mowing of water plants under the floating field with an electric mower hanging between the floating boxes, going forward-backward and rotating by sun tracking.
- The use and combination of upright tilting drivers, slidable anchoring, counterweight poles with cutting wire, double line winching, especially for panels on canals.
- Immersing complete floating solar fields and pontoons under water by vertical winching close to the bottom of the lake, and barrel stones or bottom anchors, in case of extreme weather conditions. It requires a controlled vertical winching of pontoons for water level fluctuation, instead of automatic moving of cables and hanging barrel stones.

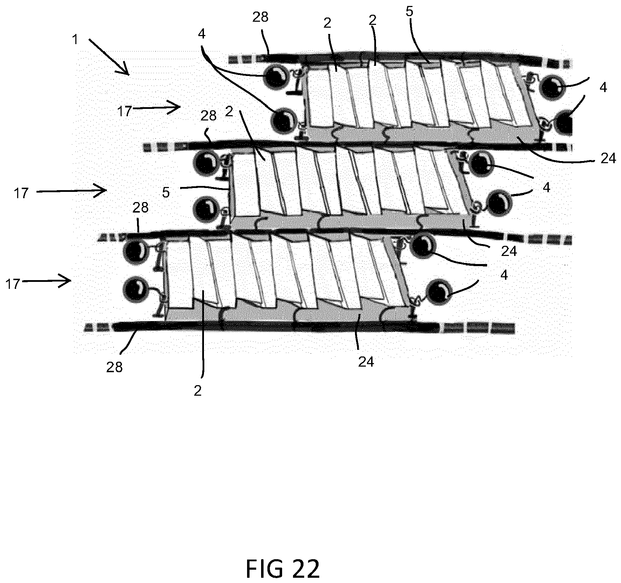

Further embodiments of a floatable solar panel assembly are shown in figures 22-26.

Figure 22 shows an embodiment of a floatable solar panel assembly that may be similar to the assembly shown above. In an alternative embodiment, the solar panels 2 may be at a fixed tiling angle, for instance around 30 degrees, or the panels may even be positioned flat, i.e., parallel to the water surface.

The floatable solar panel assembly comprises sub-assemblies 17 explained above. In the embodiment of figure 22, sub-assemblies are coupled in rows. In an embodiment, the solar panels are attached to a subframe 24 that is in turn attached to floatable elements 4. Here, the floatable elements 4 comprise buoys 4, which are here also indicated with reference number 4.

In an addition, the frame 3 can comprise additional floatable elements 4 or other floatable elements 4. Here one or more floatable elongated elements 28 are added. Here, the floatable elongated elements 28 extend parallel to the sub-assemblies 17. In an example, the floatable elongated elements 28 comprise for instance air filled pipes. In the depicted embodiment, subframes 24 couple the solar panels into sub-assemblies 17. These subframes 24 are anchored, here at both sides, between the floatable elongated elements 28.

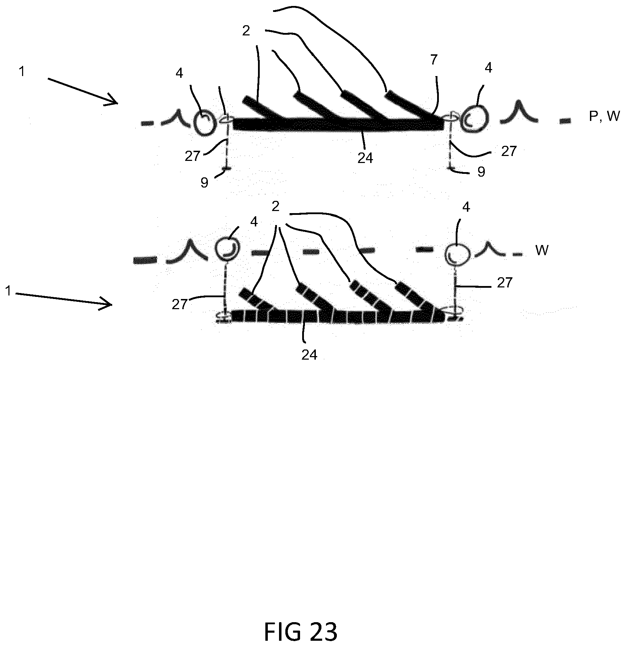

There are in the embodiment of figure 22 two ways of lowering the solar panels below the water surface W. In one embodiment, the subframe 24 is detached from the floatable elongated elements 28. The float plane adapting system 27 comprises a coupling of the subframe 24 to the (here) buoys 4. In an embodiment, this can comprise a cable coupling a subframe 27, a buoy 4 and an anchor block 9, (sea or lake) bed attachment, of element floating below the water surface. The subframe 24 with solar panels 2 is here heavier than water. Using the float plane adapting system, subframe 24 with solar panels 2 can be lowered below the water surface, and raised again after for instance a storm. This is depicted schematically in figure 23. Here, the floatable elongated elements 28 are not indicated. Using a simple and cheap winch system, solar panels 2 can be lowered below the water surface.

In an alternative embodiment, the density of the floatable elongated elements 28 can be modified. For instance, water can be introduced into pipes forming at least part of the floatable elongated elements 28. Alternative, air can be removed. These are simple and cheap methods. Other known way of changing the density may also be used. In such an embodiment, the buoys and anchors 9 provide simple placeholders for the subframes 24 with solar panels 2. Changing the density of the floatable elongated elements 28 can already provide float plane adaptation.

In yet another embodiment, the floatable elongated elements 28 and subframes 27 are integrated. In such an embodiment, for instance the density of the subframes 27 can be modified, for instance as explained above, for adapting the float plane.

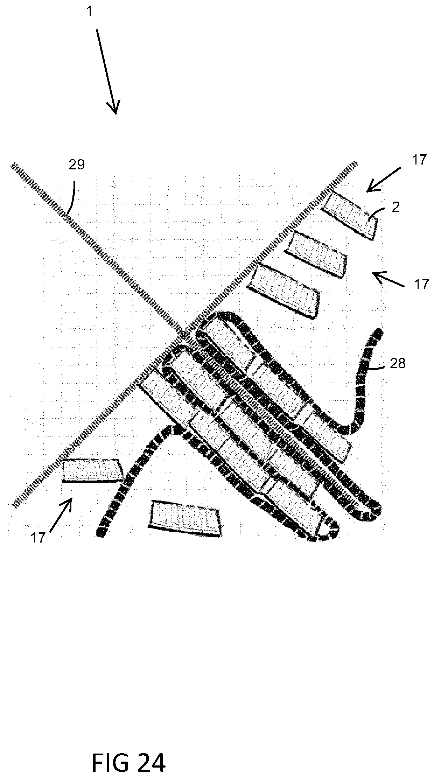

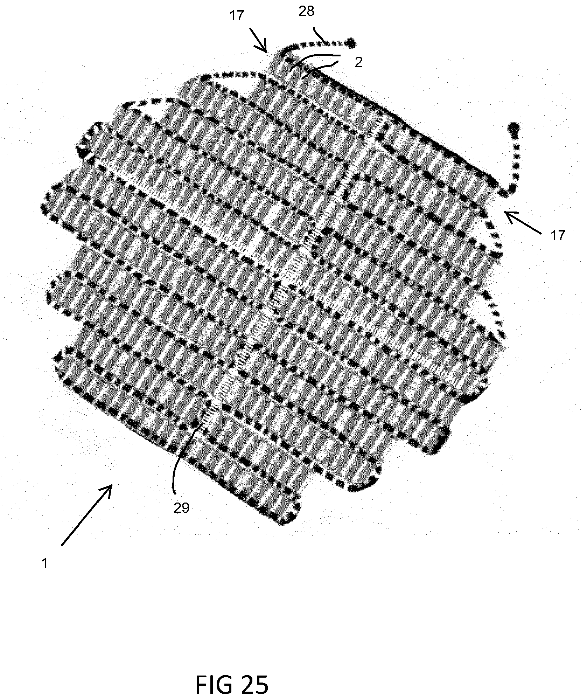

Figure 24 shows how to construct a floatable solar field on location. In figure 24, just like before, only some sub-assemblies, solar panels etc. are indicated with reference number for clarity. In figure 25 the assembled assembly is illustrated.

In this embodiment, a long pipeline 28 like a dredging pipeline is introduced. The pipeline is zigzaggingly attached to the sub-assemblies 17, holding them together into one assembly 1.

In the middle of the floatable solar field in construction there is a floating jetty 29, here a right angled cross jetty 29 which is part of frame 3. One or more mowing devices, like a circle mower, can hang beneath the jetty below the water surface. The mowing device can in an embodiment move forward-backward in 4 directions while rotation of the floatable solar panel assembly including the jetty 29 take place as described in figure 12.

Figure 25 shows that a floatable field can be constructed with one uninterrupted pipeline, which can be filled with air or temporarily with water of adapting the float plane. In this embodiment, the pipeline, a (water or air) pump and optionally a controller make the float plane adapting system 27. In embodiment, the jetty 29 can remain floating, and the further assembly can be lowered below the water surface in case of storm, hail, or other circumstances.

The floating solar ensemble with winch and pontoons can further on be constructed as described before and shown in figures 6, 8, 20 and 21, for instance.

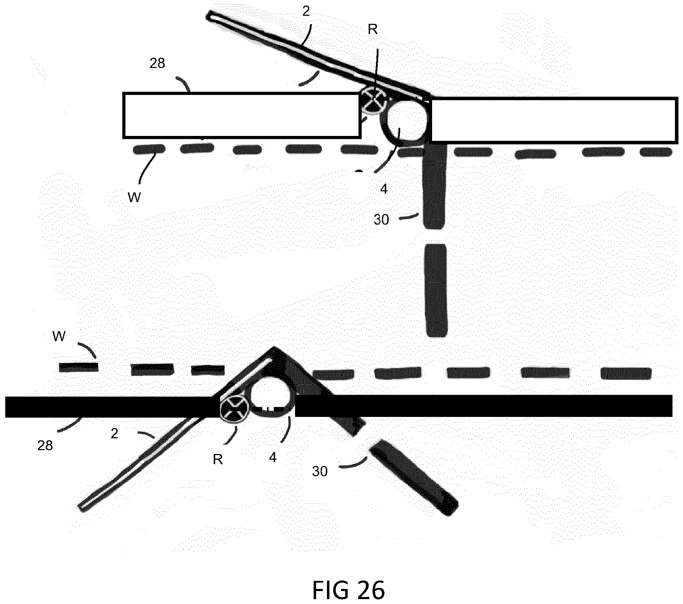

In figure 26, a simple construction providing tilting and float level adaptation is illustrated, showing two positions. Here, again a floatable elongated element 28 is provided. A coupling element 5 with a floatable element 4 is rotatably coupled to the floatable elongated element 28, rotatable about axis R (perpendicular to the paper). In the top drawing, floatable elongated element 28 is here filled with air. Counter weight 30 is provided to set a tilt angle of solar panel 2. In an embodiment, the density of floatable element 4 is increased, or a combination of counter weight and increase of density of the floatable element 4 can be used. In the lower drawing, the density of the floatable elongated element 28 is lowered, for instance by filling with water, or letting the air out. The assembly will now sink substantially below the water surface W. Furthermore, the density of floatable element 4 s decreased, and/or the density of counter weight is lowered. This causes rotation about axis R, tilting the solar panel 2 below the water surface W.

In an embodiment, the floatable solar panels assembly comprises a defrost device. In an embodiment, the defrost device comprises a gas bubble screen device for generating a gas bubble screen around a sub assembly, more in particular around a complete assembly. In an embodiment, a pipeline can be provided which has holes, and a compressor for applying air pressure on the pipeline.

The currently illustrated embodiments show examples of sun tracking, solar panel tilting, float plane adaptation, under water mowing that can be combined is illustrated and indicated. Use of winches like a forward-backward circle winch, of one or more pontoons, floating elements, anchoring elements, frames, and/or for instance tubes or pipelines can provide a simple floatable solar panel assembly providing tilting, sun tracking, float plane adaptation and under water mowing. The assembly 1 can be extended, removed, displaced easily. It is extremely cheap to build and to operate using simple controls.

Sun tracking, tilting and float plane adaptation can be combined for optimizing solar panel performance, safe storage, freeing areas temporarily for passing of ships, and the like.

Panels may wiggle in the wind, may tilt to below the water surface, and can be stabilized using float plane adaptation.

Mowing under water is facilitated using these options as illustrated.

It is illustrated how sun tracking can be done by applying a pulling force on a line around a set of sub-assemblies as illustrated in figures 6, 8 and 20.

In an alternative embodiment, illustrated in figure 7, 9, 13 and 15, sun tracking is illustrates using simple 'line-winching'. One main line is pulled back and forth, displacing one end of sub-assemblies and keeping a position of each sub-assembly substantially positioned, causing rotation in the water surface plane.

Some clauses below summarize aspects of the current developments. Furthermore, claims have been added for defining the scope of protection.

It will also be clear that the above description and drawings are included to illustrate some embodiments of the invention, and not to limit the scope of protection. Starting from this disclosure, many more embodiments will be evident to a skilled person. These embodiments are within the scope of protection and the essence of this invention and are obvious combinations of prior art techniques and the disclosure of this patent.

### Reference numbers

1 assembly
2 solar panel
3 frame
4 floatable element
5 coupling element
6 solar panel frame
7 solar panel lower side
8 anchoring system
9 anchor block
10 anchor cable
11 tilt actuator line
12 sun tracking actuator
13, 13' tracking actuator line
14 tracking actuator
15 tilt actuator
16 tracking line clamp
17 assembly group
18 cutter
19 tracking line bend
20 tracking line attachment
21 tilt actuator line attachment
22 cutting wire
23 ratchet system
24 subframe
25 tilt angle frame
26 tilt angle stops
27 Float plane adapting system
28 floatable elongated elements
29 jetty/floatable frame
30 counter weight

P float plane
W water surface
R rotational axis solar panel holding element
F Fixed world point
T track

The following clauses provide a summary of some aspects of the current assembly. Furthermore, claims are provided.

### Clauses

1. A floatable solar panel assembly comprising a series of solar panels on a floatable frame that defines a float plane with an upper side which in operation with said floatable frame floating on a water surface is above said water surface, said solar panels having a lower side, a solar panel plane, and a tilt axis, said floating solar panel system further comprising a panel tilting actuator, wherein said panel tilting actuator adapted for actuating tilting of said solar panels in an operational position range wherein said solar panels are at an upper side of said float plane and actuating said solar panels into a safe position range wherein said solar panels are in a position below said float plane.
2. The floatable solar panel assembly of clause 1, wherein at said operational position range said solar panels are with their solar panel plane between a perpendicular position at 90 degrees with respect to the float plane and an in-plane position with said solar panel plane in-plane with respect to said float plane.
3. The floatable solar panel assembly of clause 2, wherein for binging said solar panels in said safe position range, said tilt actuator is adapted for tilting said solar panels beyond said in-plane position into said safe position range, in operation below said float plane.
4. The floatable solar panel assembly of any one of the preceding clauses, comprising at least one floatable body positionally fixed to said floatable frame, said floatable body having at last one solar panel mounted to it.
5. The floatable solar panel assembly of clause 4, wherein said at least one floatable body is rotatably mounted to said floatable frame, and coupled to said tilting actuator.
6. The floatable solar panel assembly of clauses 4 or 5, wherein said at least one floatable body comprises a center of mass and a center of mass actuator adapted for displacing said center of mass of said at least one floatable body for in operation causing said at least one floatable body to rotate, causing tilting of said solar panel, in particular said center of mass actuator is operationally coupled to said tilt actuator, more in particular said mass actuator is adapted for displacing a mass in said at least one floatable body.
7. The floatable solar panel assembly of any one of clauses 4-6, comprising a series of said parallel floatable bodies holding at least one solar panel, holding solar panels with solar panel plane functionally parallel in one or more lines, one or more rows, or a combination thereof.
8. The floatable solar panel assembly of any one of the preceding clauses, further comprising a solar tracker actuator, wherein said solar tracker actuator actuates rotation of a series of said solar panels of said floatable solar panel system as an ensemble together for following or tracking an azimuth part of the suns orbit in the sky.
9. The floatable solar panel assembly of any one of the preceding clauses, further comprising a cutter below said float plane and in operation below said water surface, for cutting water plants growing below said floatable frame.
10. The floatable solar panel assembly of any one of the preceding clauses, further comprising a anchoring system for anchoring said floatable frame to a fixed world whilst floating, said anchoring system comprising a height adjustment actuator for adjusting a distance of said float plane and said fixed world, in operation enabling pulling said floatable frame and said solar panels below said water surface.

## Claims

1. A floatable solar panel assembly comprising a series of solar panels on a floatable frame that defines a float plane with an upper side which in operation with said floatable frame floating on a water surface is above said water surface, said solar panels having a lower side, a solar panel plane, and a tilt axis, said floatable solar panel assembly further comprising a float plane adjusting system for submerging said solar panels below said water surface, and a sun tracking actuator for changing an azimuth angle of said floatable frame, allowing following a sun path during a day, said sun tracking actuator coupled to said floatable frame.

2. The floatable solar panel assembly of claim 1, wherein said float plane adjusting system is adapted for submerging at least part of said floatable frame below said float plane for submerging said solar panels below said water surface.

3. The floatable solar panel assembly of any one of the preceding claims, wherein said float plane adjusting system is adapted for increasing an average density of said floatable flame to a submerge density which is larger then said float density and which allows to lower said solar panels below said water surface, in particular said submerge density is equal to or larger that a density of water in which said floatable solar panel assembly is located.

4. The floatable solar panel assembly of any one of the preceding claims, wherein said floatable frame comprise at least one floatable element and a subframe holding said solar panels, and said float plane adjusting system comprises coupling elements for coupling between said floatable bodies and said subframe for allowing said subframe to submerge.

5. The floatable solar panel assembly of any one of the preceding claims, wherein float plane adjusting system for introducing air or water into at least part of said floatable frame for adapting said average density of said floatable frame.

6. The floatable solar panel assembly of any one of the preceding claims, further comprising a panel tilting actuator, wherein said panel tilting actuator adapted for actuating tilting of said solar panels in an operational position range wherein said solar panels are at an upper side of said float plane and actuating said solar panels into a safe position range wherein said solar panels are in a position below said float plane.

7. The floatable solar panel assembly of any one of the preceding claims, wherein said sun tracking actuator comprises at least one winch and a cable system operationally coupled to said winch and to said floatable frame for rotating said floatable frame, in particular said floatable solar panel assembly having a circumference and said cable system is operationally coupled at at least two locations of said floatable frame at positions spaced apart along said circumference for upon applying a pulling force on said cable system rotating said floatable solar panel assembly, in particular said cable is coupled to a further winch and an anchoring element having a fixed position with respect to an outside environment, in particular said anchoring element comprising an anchor, for combining lowering of said floatable solar panel assembly and rotating said floatable frame.

8. The floatable solar panel assembly of any one of the preceding claims, further comprising at least one mowing system coupled to said floatable frame for allowing mowing at a position which in use is below said water surface.

9. A floatable solar panel assembly comprising a series of solar panels on a floatable frame that defines a float plane with an upper side which in operation with said floatable frame floating on a water surface is above said water surface, said solar panels having a lower side, a solar panel plane, and a tilt axis, said floatable solar panel assembly further comprising a sun tracking actuator for changing an azimuth angle of said floatable frame, allowing following a sun path during a day.

10. The floatable solar panel assembly of claim 9, wherein said sun tracking actuator comprising at least one cable coupled to said floatable frame and at least one pulling device, in particular a winch, for in operation applying a force to said at least one cable for rotating said floatable frame on said water surface.

11. A floatable solar panel assembly comprising a series of solar panels on a floatable frame that defines a float plane with an upper side which in operation with said floatable frame floating on a water surface is above said water surface, said solar panels having a lower side, a solar panel plane, and a tilt axis, said floatable solar panel assembly further comprising a mowing system comprising at least one cutter having a mowing position at a distance from said float plane, in operation below said water surface.

12. The floatable solar panel assembly of claim 11, wherein said mowing system is coupled to said floatable frame which in operation is below said water surface.
